# EUROPEAN PATENT SPECIFICATION

(11) **EP 3 150 938 B1**
(45) Date of publication and mention of the grant of the patent: **02.01.2019**
(21) Application number: 16184344.6
(22) Date of filing: 16.08.2016
(51) Int. Cl.: F24H 4/00, F25B 25/00, F25B 27/02, F24F 1/00

(54) **GAS HEAT-PUMP SYSTEM**
GASWÄRMEPUMPENSYSTEM
SYSTÈME DE POMPE À CHALEUR À GAZ

(30) Priority: 30.09.2015 KR 20150137601
(43) Date of publication of application: 05.04.2017
(73) Proprietor: LG ELECTRONICS INC., Yeongdeungpo-gu Seoul 07336 (KR)
(72) Inventor: CHOI, Minhwan, 08592 Seoul (KR)
(74) Representative: Vossius & Partner Patentanwälte Rechtsanwälte mbB

(56) References cited:
- EP-A2- 1 334 851
- DE-A1-102010 010 357
- DE-A1-102012 106 894
- JP-A- 2012 093 081
- KR-A- 20150 048 403

## Description

A gas heat-pump system is disclosed herein.

A heat-pump system is a system having a refrigeration cycle which may perform a cooling operation or a warming operation. The heat-pump system may be interlocked with a hot-water supply apparatus or an air conditioner. That is, hot water may be produced or air-conditioning for the cooling and warming operations may be performed using a heat source obtained by heat exchange between a refrigerant of the refrigeration cycle and a predetermined heat storage medium.

For the refrigeration cycle, a compressor which compresses the refrigerant, a condenser which condenses the refrigerant compressed in the compressor, an expander which depressurizes the refrigerant condensed in the condenser, and an evaporator which evaporates the depressurized refrigerant are included.

The heat-pump system includes a gas heat-pump (GHP) system. In the GHP system, a high-capacity compressor which is intended not for home use, but for industries or for air-conditioning a large building is required. That is, the GHP system may be used as a system which uses a gas engine, instead of an electric motor, to drive a compressor for compressing a large amount of refrigerant into a high temperature and high pressure gas.

The GHP system includes an engine which generates power using a mixture (hereinafter, a mixed fuel) of fuel and air, an air supply device which supplies the mixed fuel to the engine, a fuel supply device, and a mixer which mixes the air with the fuel.

The engine may include a cylinder to which the mixed fuel is supplied, and a piston which is provided in the cylinder to be movable. The air supply device may include an air filter which purifies the air. And the fuel supply device includes a zero governor for supplying the fuel having a constant pressure.

The GHP system includes cooling water which cools the engine while being circulated in the engine. The cooling water may absorb waste heat of the engine, and the absorbed waste heat may be supplied to the refrigerant circulated in the GHP system, and may assist performance enhancement of the system. In particular, when the warming operation is performed by the GHP system, evaporation performance in the refrigeration cycle may be enhanced.

However, the waste heat of the engine may be continuously produced more than assisting the refrigeration cycle. But since a conventional GHP system is not configured to additionally use the remaining waste heat of the engine, there is a problem that the remaining waste heat is abandoned to the outside.

Prior art document related to the conventional GHP system is as follows.
1. Registration number (Registration date): Korean Patent No.10-1341533 (December 9, 2013)
2. Title of the invention : Gas heat-pump system and control method thereof.

DE 10 2010 010357 A1 relates to a heat pump system having a compressor that is driven by a gas motor, an expansion valve, an outer heat transmitter and a heat transmitter.

JP 2012 093081 A relates to an engine driven heat pump device having an auxiliary heat source unit, a hot water storing tank, a heat conveying fluid supply means, and an operation control device for controlling the respective operations of a cooling water circulation means and the heat conveying fluid supply means so as to heat the cooling water circulated by the cooling water circulation means by heat conveying fluid supplied by the heat conveying fluid supply means in the waste heat heat-exchanger.

The present invention is directed to providing a gas heat-pump (GHP) system which is able to use waste heat of an engine.

Also, the present invention is directed to providing a GHP system which is able to reduce the number of additional components and to increase productivity thereof.

Also, the present invention is directed to providing a GHP system which is able to simply realize circulation control of cooling water.

Also, the present invention is directed to providing a GHP system having a structure in which circulating water is bypassed to an engine when a temperature of the circulating water or the cooling water is not increased by a set temperature.

Also, the present invention is directed to providing a GHP system having a structure which is able to reduce resistance against cooling water which is being circulated.

The above problems are solved by the features of the independent claim, the dependent claims relate to further aspects of the invention.

According to an aspect of the present invention, there is provided a gas heat-pump system with the features of claim 1.

The cooling water pipe comprises a first pipe which extends from the cooling water tank to the engine so that the cooling water is introduced into the engine.

The cooling water pipe further comprises a second pipe which extends from an outlet side of the engine to the first flow switching part, and the hot water heat exchanger is installed at the second pipe.

The cooling water pipe further comprises a third pipe which extends from the first flow switching part to the second flow switching part.

The cooling water pipe further comprises a fourth pipe which extends from one port of the second flow switching part to the auxiliary heat exchanger.

The cooling water pipe further comprises a fifth pipe which extends from another port of the second flow switching part to the radiator.

The gas heat-pump system further comprises a sixth pipe which extends from the first flow switching part to the first pipe and bypasses the cooling water heat-exchanged in the hot water heat exchanger to the engine.

The gas heat-pump system further comprises: an inlet path which extends from the hot water supply tank to the hot water heat exchanger and guides the fluid to the hot water heat exchanger, and an outlet path which extends from the hot water heat exchanger to the hot water supply tank and guides the fluid heat-exchanged in the hot water heat exchanger to the hot water supply tank.

The hot water heat exchanger comprises: a cooling water pipe for hot water supply which guides the flow of the cooling water; and a hot water pipe for hot water supply which guides a flow of the fluid supplied from the hot water supply tank.

The gas heat-pump system further comprises a cooling water temperature sensor which senses a temperature of the cooling water discharged from the engine, wherein, when it is recognized that a temperature value sensed by the cooling water temperature sensor is a set temperature or less, the first flow switching part is controlled so that the cooling water flows through the sixth pipe.

At least one of the plurality of flow switching parts comprise a 3-way valve.

The second pipe further comprises: a first introduction pipe which guides the cooling water discharged from the engine to the hot water heat exchanger; and a first discharge pipe which guides the cooling water heat-exchanged in the hot water heat exchanger to the first flow switching part.

The gas heat-pump system further comprises a connection pipe which extends from one point of the first introduction pipe to one point of the first discharge pipe so that at least some of the cooling water discharged from the engine bypasses the hot water heat exchanger.

The gas heat-pump system further comprises a bypass valve installed at the connection pipe.

The gas heat-pump system further comprises a sixth pipe which extends from the first flow switching part to the first pipe, wherein the hot water heat exchanger is installed at the sixth pipe.

According to another aspect of the present invention, there is provided a gas heat-pump system comprising: a compressor configured to compress a refrigerant flowing through a refrigerant pipe; an engine configured to provide power for an operation of the compressor, and in which a mixed fuel in which a fuel and air are mixed is burned; a cooling water pump which compels a flow of cooling water for cooling the engine; a cooling water pipe connected to the cooling water pump, and configured to guide the flow of the cooling water; a hot water heat exchanger in which heat exchange between the cooling water flowing through the cooling water pipe and a fluid supplied from a hot water supply tank is performed; a first 3-way valve installed at the cooling water pipe, and in which the cooling water passed through the hot water heat exchanger is introduced; a second 3-way valve in which the cooling water passed through the first 3-way valve is introduced; an auxiliary heat exchanger disposed at an outlet side of the second 3-way valve, and in which heat exchange between the cooling water flowing through the cooling water pipe and the refrigerant flowing through the refrigerant pipe is performed; and a bypass pipe connected to the first 3-way valve, and configured to guide the cooling water to the engine.

The gas heat-pump system further comprises a cooling water tank in which the cooling water for cooling the engine is stored, wherein the cooling water pipe comprises a first pipe which supplies the cooling water from the cooling water tank toward the engine.

The cooling water pipe further comprises a second pipe which guides the cooling water passed through the engine to the hot water heat exchanger, and is connected to a first port of the first 3-way valve.

The cooling water pipe further comprises: a third pipe which extends from a second port of the first 3-way valve to the second 3-way valve; and a fourth pipe which extends from the second 3-way valve to the auxiliary heat exchanger.

The bypass pipe extends from a third port of the first 3-way valve, and is connected to the first pipe.

### BRIEF DESCRIPTION OF THE DRAWINGS

Embodiments will be described in detail with reference to the following drawings in which like reference numerals refer to like elements, and wherein:
FIG. 1 is a cycle view illustrating a configuration of a gas heat-pump (GHP) system according to a first embodiment of the present invention;
FIG. 2 is a cycle view illustrating flows of a refrigerant, cooling water and a mixed fuel when the GHP system is operated;
FIG. 3 is a system view illustrating a configuration of a main part of the GHP system according to the first embodiment of the present invention;
FIG. 4 is a system view illustrating the flow of the cooling water in a structure of FIG. 3 when the GHP system is operated in a first mode;
FIG. 5 is a system view illustrating the flow of the cooling water in the structure of FIG. 3 when the GHP system is operated in a second mode;
FIG. 6 is a system view illustrating a configuration of a main part of a GHP system according to a second embodiment of the present invention; and
FIG. 7 is a system view illustrating a configuration of a main part of a GHP system according to a third embodiment of the present invention.

### DETAILED DESCRIPTION

Hereinafter, exemplary embodiments of the present invention will be described in detail with reference to the accompanying drawings. However, the present invention is not limited to the exemplary embodiments disclosed below, and those skilled in the art appreciating the ideas of the present invention can easily propose other embodiments within the scope of the present invention.

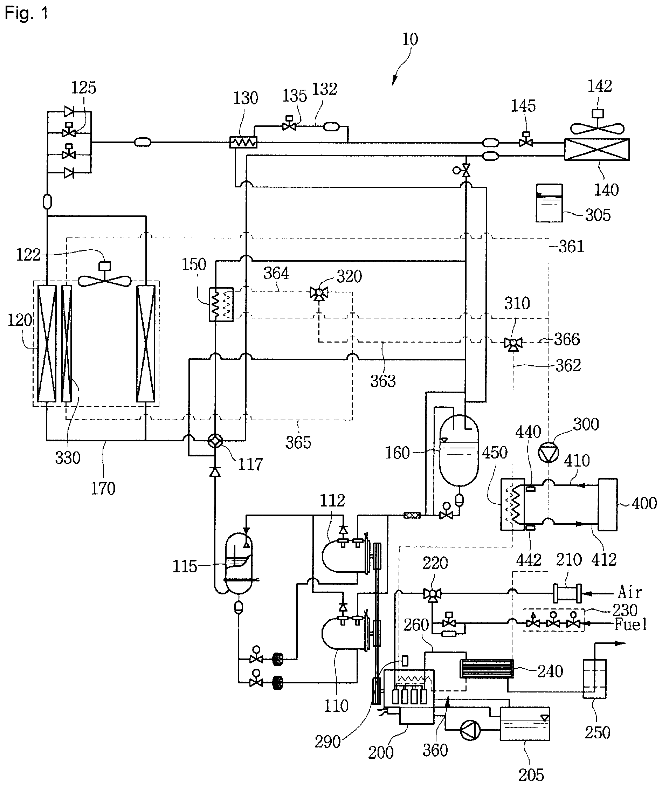

FIG. 1 is a cycle view illustrating a configuration of a gas heat-pump (GHP) system according to a first embodiment of the present invention.

Referring to FIG. 1, a GHP system 10 according to a first embodiment of the present invention includes a plurality of components which forms a refrigeration cycle as an air-conditioning system. Specifically, for the refrigeration cycle, first and second compressors 110 and 112 which compress a refrigerant, an oil separator 115 which separates oil from the refrigerant compressed in the first and second compressors 110 and 112, and a 4-way valve 117 which switches a direction of the refrigerant passed through the oil separator 115 are included.

The GHP system 10 further includes an outdoor heat exchanger 120 and an indoor heat exchanger 140. The outdoor heat exchanger 120 may be disposed in an outdoor unit located at an outdoor side, and the indoor heat exchanger 140 may be disposed in an indoor unit located at an indoor side. The refrigerant passed through the 4-way valve 117 flows to the outdoor heat exchanger 120 or the indoor heat exchanger 140.

Meanwhile, elements of the system illustrated in FIG. 1 may be disposed at the outdoor side, i.e., inside the outdoor unit, except the indoor heat exchanger 140 and an indoor expander 145.

Specifically, when the GHP system 10 is operated in a cooling operation mode, the refrigerant passed through the 4-way valve 117 flows toward the indoor heat exchanger 140 via the outdoor heat exchanger 120. However, when the GHP system 10 is operated in a warming operation mode, the refrigerant passed through the 4-way valve 117 flows toward the outdoor heat exchanger 120 via the indoor heat exchanger 140.

The GHP system 10 further includes a refrigerant pipe 170 (a solid line path) which connects the compressors 110 and 112, the outdoor heat exchanger 120, the indoor heat exchanger 140 and so on, and guides a flow of the refrigerant.

A configuration of the GHP system 10 will be described based on the cooling operation mode.

The refrigerant flowed to the outdoor heat exchanger 120 may be condensed by exchanging heat with external air.

An outdoor fan 122 which blows the external air is provided at one side of the outdoor heat exchanger 120.

A main expander 125 for depressurizing the refrigerant is provided at an outlet side of the outdoor heat exchanger 120. For example, the main expander 125 includes an electronic expansion valve (EEV). When a cooling operation is performed, the main expander 125 is fully opened, and thus the refrigerant is not depressurized.

A supercooling heat exchanger 130 which additionally cools the refrigerant is provided at an outlet side of the main expander 125. And a supercooling path 132 is connected to the supercooling heat exchanger 130. The supercooling path 132 is branched from the refrigerant pipe 170, and connected to the supercooling heat exchanger 130.

A supercooling expander 135 is installed at the supercooling path 132. The refrigerant flowing through the supercooling path 132 may be depressurized while passing through the supercooling expander 135. Heat exchange between the refrigerant in the refrigerant pipe 170 and the refrigerant in the supercooling path 132 may be performed at the supercooling heat exchanger 130. In the heat exchange, the refrigerant in the refrigerant pipe 170 is supercooled, and the refrigerant in the supercooling path 132 absorbs heat.

The supercooling path 132 is connected to a gas-liquid separator 160. The refrigerant in the supercooling path 132 which is heat-exchanged in the supercooling heat exchanger 130 may be introduced into the gas-liquid separator 160.

The refrigerant in the refrigerant pipe 170 passed through the supercooling heat exchanger 130 flows toward the indoor unit, and is depressurized in the indoor expander 145 and then evaporated in the indoor heat exchanger 140. The indoor expander 145 is installed inside the indoor unit, and may be configured with the EEV.

The refrigerant evaporated in the indoor heat exchanger 140 flows to an auxiliary heat exchanger 150 via the 4-way valve 117. The auxiliary heat exchanger 150 is a heat exchanger in which the heat exchange between the evaporated low-pressure refrigerant and high-temperature cooling water is performed, and may include, for example, a plate type heat exchanger.

Since the refrigerant evaporated in the indoor heat exchanger 140 may absorb the heat while passing through the auxiliary heat exchanger 150, evaporation efficiency may be improved. The gas-liquid separator 160 which separates the gas refrigerant from the evaporated refrigerant is provided at an outlet side of the auxiliary heat exchanger 150. The gas refrigerant and the liquid refrigerant passed through the auxiliary heat exchanger 150 are separated from each other in the gas-liquid separator 160, and the separated gas refrigerant may be suctioned into the first and second compressors 110 and 112.

Meanwhile, the GHP system 10 further includes a cooling water tank 305 in which the cooling water for cooling an engine 200 is stored, and a cooling water pipe 360 (a dotted line path) which guides a flow of the cooling water. A cooling water pump 300 which generates a flowing force of the cooling water, a plurality of flow switching parts 310 and 320 which switch a flow direction of the cooling water, and a radiator 330 which cools the cooling water may be installed at the cooling water pipe 360.

The plurality of flow switching parts 310 and 320 include a first flow switching part 310 and a second flow switching part 320. For example, each of the first flow switching part 310 and the second flow switching part 320 may include a 3-way valve. The first flow switching part 310 may be referred to as a "first 3-way valve", and the second flow switching part 320 may be referred to as a "second 3-way valve".

The radiator 330 may be installed at one side of the outdoor heat exchanger 120, and the cooling water in the radiator 330 may exchange heat with the external air by driving of the outdoor fan 122, and thus may be cooled in this process.

When the cooling water pump 300 is driven, the cooling water stored in the cooling water tank 305 may pass through the engine 200 which will be described later and an exhaust gas heat exchanger 240, and then may selectively flow to the radiator 330 or the auxiliary heat exchanger 150 via the first flow switching part 310 and the second flow switching part 320.

The GHP system 10 includes the engine 200 which generates power for driving the first and second compressors 110 and 112, and a mixer 220 which is disposed at an inlet side of the engine 200 to supply a mixed fuel.

And the GHP system 10 includes an air filter 210 which supplies purified air to the mixer 220, and a zero governor 230 which supplies a fuel having a predetermined pressure or less. It may be understood that the zero governor 230 is a device which constantly controls and supplies an outlet pressure of the fuel, regardless of an inlet pressure of the fuel or a change in a flow rate.

The air passed through the air filter 210 and the fuel discharged from the zero governor 230 are mixed in the mixer 220, and form a mixed fuel. And the mixed fuel may be supplied to the engine 200.

The GHP system 10 further includes an exhaust gas heat exchanger 240 which is provided at an outlet side of the engine 200 and in which an exhaust gas generated after burning the mixed fuel is introduced, and a muffler 250 which is provided at an outlet side of the exhaust gas heat exchanger 240 to reduce a noise of the exhaust gas. The heat exchange between the cooling water and the exhaust gas may be performed in the exhaust gas heat exchanger 240.

An oil tank 205 which supplies oil to the engine 200 may be provided at one side of the engine 200.

The cooling water pipe 360 includes a first pipe 361 which extends from the cooling water tank 305 toward the engine 200. Specifically, the first pipe 361 includes a first pipe part which extends from the cooling water tank 305 to the exhaust gas heat exchanger 240, and a second pipe part which extends from the exhaust gas heat exchanger 240 to the engine 200. Therefore, the cooling water supplied from the cooling water tank 305 exchanges heat with the exhaust gas while passing through the exhaust gas heat exchanger 240, and is introduced into the engine 200, and thus collects waste heat of the engine 200. And the cooling water pump 300 which compels the flow of the cooling water may be installed at the first pipe 361.

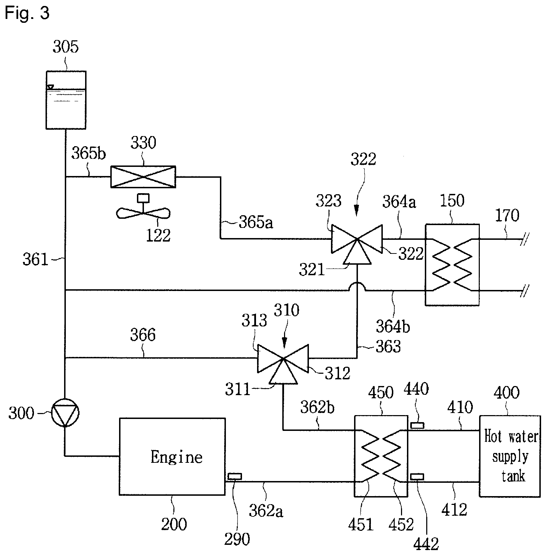

The cooling water pipe 360 further includes a second pipe 362 which guides the cooling water passed through the engine 200 to the first flow switching part 310. The second pipe 362 may be understood as a pipe which extends from the outlet side of the engine 200 to a first port 311 (refer to FIG. 3) of the first flow switching part 310.

A hot water heat exchanger 450 may be installed at the second pipe 362. Specifically, the hot water heat exchanger 450 may be understood as a heat exchanger for heat-exchanging a fluid supplied from a hot water supply tank 400 with the cooling water flowing through the second pipe 362. For example, the fluid may include water. Since the heat exchange between the fluid and the cooling water is performed in the hot water heat exchanger 450, the fluid may be heated, and the cooling water may be cooled.

The cooling water pipe 360 further includes a third pipe 363 which guides the cooling water from the first flow switching part 310 to the second flow switching part 320. The third pipe 363 may be understood as a pipe which extends from a second port 312 (refer to FIG. 3) of the first flow switching part 310 to a first port 321 of the second flow switching part 320.

The cooling water pipe 360 further includes a fourth pipe 364 which guides the cooling water from the second flow switching part 320 to the auxiliary heat exchanger 150. The fourth pipe 364 extends from a second port 322 (refer to FIG. 3) of the second flow switching part 320 to the auxiliary heat exchanger 150, passes through the auxiliary heat exchanger 150, and then extends and is coupled to a first point of the first pipe 361.

The cooling water pipe 360 further includes a fifth pipe 365 which guides the cooling water from the second flow switching part 320 to the radiator 330. The fifth pipe 365 extends from a third port 323 (refer to FIG. 3) of the second flow switching part 320 to the radiator 330, passes through the radiator 330, and then extends and is coupled to a second point of the first pipe 361.

The cooling water pipe 360 further includes a sixth pipe 366 which guides the cooling water from the first flow switching part 310 to the first pipe 361. The sixth pipe 366 may be understood as a pipe which extends from a third port 313 (refer to FIG. 3) of the first flow switching part 310, and is coupled to a third point of the first pipe 361.

For example, when a temperature of the cooling water passed through the engine 200 is less than a set temperature, this means that an effect in which the cooling water flows to the auxiliary heat exchanger 150 or the radiator 330 and exchanges with it is poor, and thus the cooling water introduced into the first port 311 of the first flow switching part 310 may be bypassed to the first pipe 361 through the sixth pipe 366, and then may be guide to the engine 200. The sixth pipe 366 may be referred to as a "bypass pipe".

The GHP system 10 further includes hot water supply paths 410 and 412 which connect the hot water supply tank 400 with the hot water heat exchanger 450. Each of the hot water supply paths 410 and 412 includes an inlet path 410 which guides the fluid from the hot water supply tank 400 to the hot water heat exchanger 450, and an outlet path 412 which returns the fluid heat-exchanged in the hot water heat exchanger 450 to the hot water supply tank 400.

The GHP system 10 further includes temperature sensors 440 and 442 which are installed at the hot water supply paths 410 and 412, respectively. The temperature sensors 440 and 442 include a first temperature sensor 440 which is installed at the inlet path 410 to detect a temperature of the fluid introduced into the hot water heat exchanger 450, and a second temperature sensor 442 which is installed at the outlet path 412 to detect a temperature of the fluid discharged from the hot water heat exchanger 450.

The GHP system 10 further includes a cooling water temperature sensor 290 which is installed at the outlet side of the engine 200 to detect a temperature of the cooling water passed through the engine 200. When a temperature of the cooling water detected by the cooling water temperature sensor 290 is a set temperature or more, the GHP system 10 is operated in a first mode, and when the temperature of the cooling water is less than the set temperature, the GHP system 10 is operated in a second mode. This will be described later.

Hereinafter, actions of the cooling water and the mixed fuel according to an operation mode of the GHP system 10 according to the first embodiment of the present invention will be described.

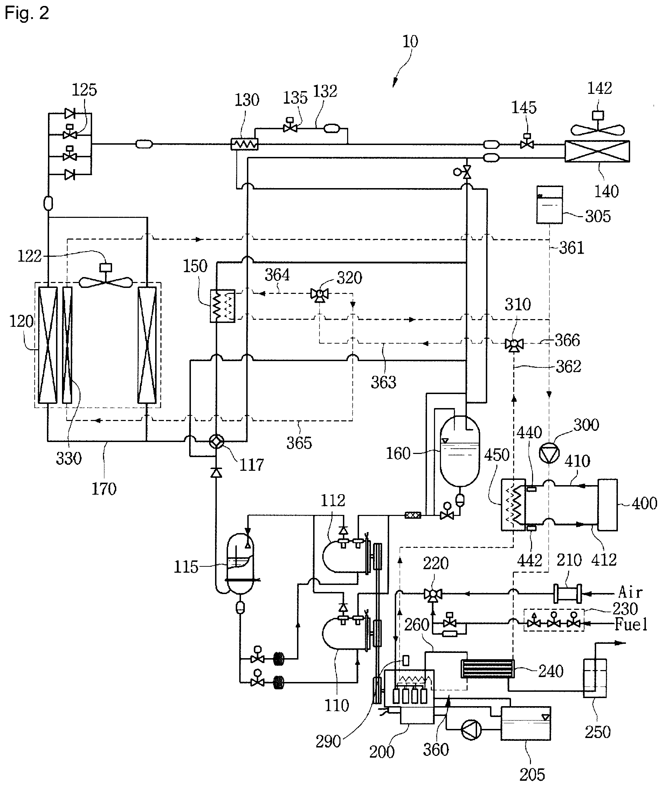

FIG. 2 is a cycle view illustrating the flows of the refrigerant, the cooling water and the mixed fuel when the GHP system is operated.

First, when the GHP system 10 performs a warming operation, the refrigerant passes through the first and second compressors 110 and 112, the oil separator 115, the 4-way valve 117, the indoor heat exchanger 140 and the supercooling heat exchanger 130, is depressurized in the main expander 125, and exchanges heat in the outdoor heat exchanger 120, and then is introduced again into the 4-way valve 117. Here, the indoor heat exchanger 140 may serve as a "condenser", and the outdoor heat exchanger 120 may serve as an "evaporator".

The refrigerant passed through the 4-way valve 117 may be introduced into the auxiliary heat exchanger 150, and may exchange heat with the cooling water flowing through the fourth pipe 364. The refrigerant introduced into the auxiliary heat exchanger 150 is an evaporated refrigerant, and has a lower temperature and lower pressure, and the cooling water supplied to the auxiliary heat exchanger 150 has a high temperature due to heat of the engine 200. Therefore, the refrigerant in the auxiliary heat exchanger 150 absorbs heat from the cooling water, and thus evaporation performance may be improved.

The refrigerant heat-exchanged in the auxiliary heat exchanger 150 is introduced into the gas-liquid separator 160 and phase separated, and then may be suctioned into the first and second compressors 110 and 112. The refrigerant may flow while repeating the above-described cycle.

Meanwhile, when the cooling water pump 300 is driven, the cooling water discharged from the cooling water pump 300 is introduced into the exhaust gas heat exchanger 240 along the first pipe 361, and exchanges heat with the exhaust gas. And the cooling water discharged from the exhaust gas heat exchanger 240 is introduced into the engine 200, cools the engine 200, passes through the second pipe 362, and is introduced into the first port 311 of the first flow switching part 310.

By control of the first flow switching part 310, the cooling water passed through the first flow switching part 310 flows toward the second flow switching part 320 along the third pipe 363. And the cooling water passed through the second flow switching part 320 is introduced into the auxiliary heat exchanger 150 via the fourth pipe 364, and may exchange heat with the refrigerant. And the cooling water passed through the auxiliary heat exchanger 150 is introduced into the cooling water pump 300. The cooling water may flow while repeating such a cycle.

Meanwhile, in the warming operation, a flow of the cooling water toward the radiator 330 may be limited. Generally, since the warming operation is performed when the external air has a low temperature, there is high possibility that the cooling water is cooled while flowing through the cooling water pipe 360, even through being not cooled in the radiator 330. Therefore, when the warming operation is performed, the first and second flow switching parts 310 and 320 may be controlled so that the cooling water does not pass through the radiator 330.

However, when the heat exchange in the auxiliary heat exchanger 150 is not required, the cooling water may be introduced from the second flow switching part 320 into the radiator 330 via the fifth pipe 365.

The driving of the engine 200 will be described.

The air filtered in the air filter 210 and the fuel of which a pressure is controlled through the zero governor 230 are mixed in the mixer 220. The mixed fuel mixed in the mixer 220 is supplied to the engine 200, and drives the engine 200. And the exhaust gas discharged from the engine 200 is introduced into the exhaust gas heat exchanger 240, exchanges heat with the cooling water, and then is discharged to the outside via the muffler 250.

Meanwhile, when the GHP system 10 performs a cooling operation, the refrigerant passes through the first and second compressors 110 and 112, the oil separator 115, the 4-way valve 117, the outdoor heat exchanger 120 and the supercooling heat exchanger 130, and is depressurized in the indoor expander 145, and exchanges heat in the indoor heat exchanger 140, and then is introduced again into the 4-way valve 117. Here, the outdoor heat exchanger 120 may serve as a "condenser", and the indoor heat exchanger 140 may serve as an "evaporator".

The refrigerant passed through the 4-way valve 117 may be introduced into the auxiliary heat exchanger 150, and may exchange heat with the cooling water flowing through the cooling water pipe 360. And the refrigerant heat-exchanged in the auxiliary heat exchanger 150 is introduced into the gas-liquid separator 160 and phase-separated, and then may be suctioned into the first and second compressors 110 and 112. The refrigerant may flow while repeating the above-described cycle.

Meanwhile, when the cooling water pump 300 is driven, the cooling water discharged from the cooling water pump 300 is introduced into the exhaust gas heat exchanger 240, and exchanges heat with the exhaust gas. And the cooling water discharged from the exhaust gas heat exchanger 240 is introduced into the engine 200, cools the engine 200, and is introduced into the first flow switching part 310. The flow of the cooling water until being introduced into the first flow switching part 310 is the same as that of the cooling water in the warming operation.

The cooling water passed through the first flow switching part 310 is introduced into the second flow switching part 320 and may flow to the radiator 330 by control of the second flow switching part 320, and may exchange heat with the external air. And the cooling water cooled in the radiator 330 is introduced into the cooling water pump 300. The cooling water may flow while repeating such a cycle.

Meanwhile, in the cooling operation, the flow of the cooling water toward the auxiliary heat exchanger 150 may be limited. Generally, since the cooling operation is performed when the external air has a high temperature, heat absorption of the evaporated refrigerant for ensuring the evaporation performance may not be required. Therefore, when the cooling operation is performed, the first and second flow switching parts 310 and 320 may be controlled so that the cooling water does not pass through the auxiliary heat exchanger 150.

However, when the heat exchange in the auxiliary heat exchanger 150 is required, the cooling water may be introduced into the auxiliary heat exchanger 150 via the second flow switching part 320.

Since the driving of the engine 200 is the same as that of the engine 200 in the warming operation, detailed description thereof will be omitted.

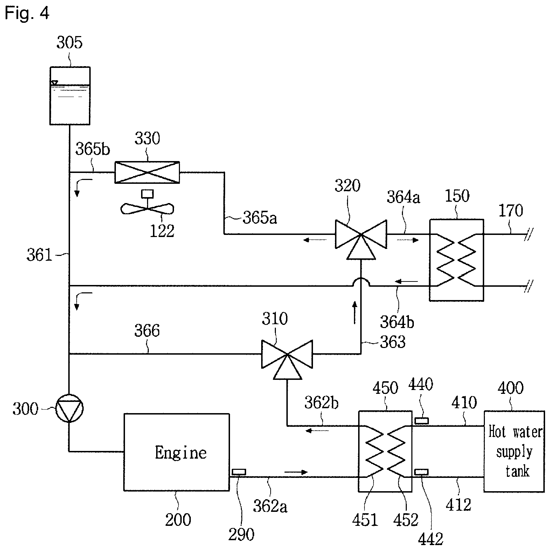

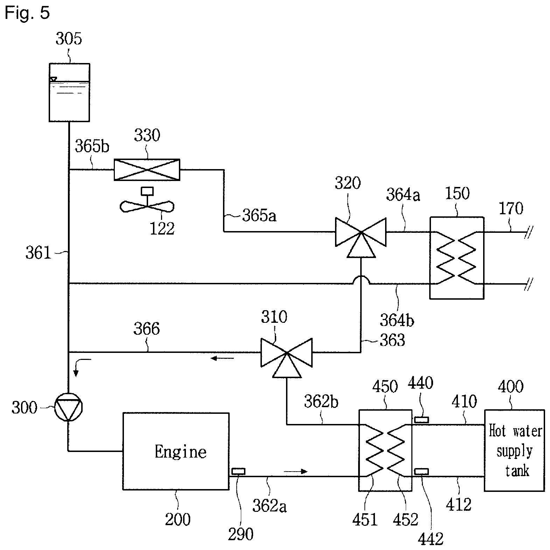

FIG. 3 is a system view illustrating a configuration of a main part of the GHP system according to the first embodiment of the present invention, FIG. 4 is a system view illustrating the flow of the cooling water in a structure of FIG. 3 when the GHP system is operated in a first mode, and FIG. 5 is a system view illustrating the flow of the cooling water in the structure of FIG. 3 when the GHP system is operated in a second mode.

Referring to FIG. 3, the GHP system 10 according to the first embodiment of the present invention includes the hot water heat exchanger 450 in which the heat exchange between the cooling water heated while passing through the engine 200 and the fluid in the hot water supply tank 400 is performed.

The hot water heat exchanger 450 may be installed at the second pipe 362 which extends from the engine 200 to the first port 311 of the first flow switching part 310. Specifically, the second pipe 362 includes a first introduction pipe 362a which extends from the outlet side of the engine 200 to the hot water heat exchanger 450, and a first discharge pipe 362b which extends from the hot water heat exchanger 450 to the first flow switching part 310.

A cooling water pipe 451 for hot water supply which guides the flow of the cooling water is provided inside the hot water heat exchanger 450. The cooling water pipe 451 for hot water supply may be understood as a pipe which forms at least a part of the second pipe 362. And a hot water pipe 452 for hot water supply which guides the flow of the fluid is provided inside the hot water heat exchanger 450. The hot water pipe 452 for hot water supply may be understood as a pipe which forms at least a part of the hot water supply paths 410 and 412.

The GHP system 10 further includes the fourth pipe 364 which guides the flow of the refrigerant passing through the auxiliary heat exchanger 150. The fourth pipe 364 includes a second introduction pipe 364a which guides the flow of the refrigerant from the second port 322 of the second flow switching part 320 to the auxiliary heat exchanger 150, and a second discharge pipe 364b which extends from the auxiliary heat exchanger 150 to the first pipe 361, and guides the flow of the refrigerant passed through the auxiliary heat exchanger 150.

The GHP system 10 further includes the fifth pipe 365 which guides the flow of the refrigerant passing through the radiator 330. The fifth pipe 365 includes a third introduction pipe 365a which guides the flow of the refrigerant from the third port 323 of the second flow switching part 320 to the radiator 330, and a third discharge pipe 365b which extends from the radiator 330 to the first pipe 361, and guides the flow of the refrigerant passed through the radiator 330.

FIG. 4 illustrates a flow state of the cooling water in the first mode of the GHP system 10. Here, the "first mode" is a general operation mode of the GHP system 10, for example, may be understood as a cooling operation mode or a warming operation mode. The first mode may be performed when a temperature of the refrigerant passed through the engine 200 is a set temperature or more.

When the cooling water pump 300 is driven, the cooling water passes through the engine 200, is introduced into the hot water heat exchanger 450 through the first introduction pipe 362a, exchanges heat with the fluid supplied from the hot water supply tank 400, and then is discharged to the first discharge pipe 362b.

And the cooling water is introduced into the first port 311 of the first flow switching part 310, and discharged to the second port 312. At this point, the third port 313 is closed, and thus the flow of the cooling water to the sixth pipe 366 is limited.

The cooling water discharged from the first flow switching part 310 is introduced into the first port 321 of the second flow switching part 320, and may flow to the auxiliary heat exchanger 150 through the second port 322, or may flow to the radiator 330 through the third port 323.

The cooling water flowing to the second port 322 is introduced into the auxiliary heat exchanger 150 through the second introduction pipe 364a, exchanges heat in the auxiliary heat exchanger 150, and then may flow to the first pipe 361 through the second discharge pipe 364b.

And the cooling water flowing to the third port 323 is introduced into the radiator 330 through the third introduction pipe 365a, exchanges heat in the radiator 330, and then may flow to the first pipe 361 through the third discharge pipe 365b.

The cooling water flowed to the first pipe 361 may pass through the cooling water pump 300, and may be introduced again into the engine 200.

FIG. 5 illustrates the flow state of the cooling water in the second mode of the GHP system 10. Here, the "second mode" may be understood as a bypass mode of the cooling water. The second mode may be performed when the temperature of the cooling water passed through the engine 200 is the set temperature or less.

When the cooling water pump 300 is driven, the cooling water passes through the engine 200, is introduced into the hot water heat exchanger 450 through the first introduction pipe 362a, exchanges heat with the fluid supplied from the hot water supply tank 400, and then is discharged to the first discharge pipe 362b.

And the cooling water is introduced into the first port 311 of the first flow switching part 310, and discharged to the third port 313. At this point, the second port 312 is closed, and thus the flow of the cooling water to the third pipe 363 is limited.

Since the cooling water does not have a sufficiently high temperature which is the set temperature or more, an effect that the cooling water flows to the auxiliary heat exchanger 150 and heats the refrigerant through the heat exchange with the refrigerant is not good, and a necessity that the cooling water flows to the radiator 330 and is cooled by the outdoor fan 122 is low.

The refrigerant discharged through the third port 313 is introduced into the first pipe 361 via the sixth pipe 366, and passes through the cooling water pump 300. And the cooling water passes through the engine 200.

Hereinafter, second and third embodiments of the present invention will be described. Since these embodiments are the same as the first embodiment, except some configurations, differences therebetween will be mainly described, and reference numerals and descriptions of the same parts as those in the first embodiment quote those of the parts in the first embodiment.

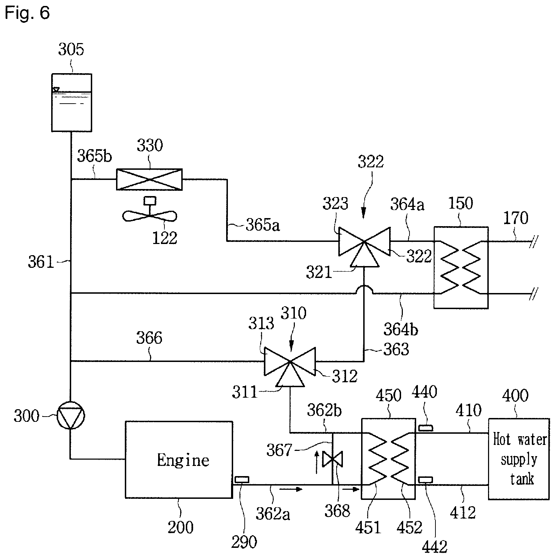

FIG. 6 is a system view illustrating a configuration of a main part of a GHP system according to a second embodiment of the present invention.

Referring to FIG. 6, a GHP system 10 according to a second embodiment of the present invention includes a connection pipe 367 which is installed such that at least some of the cooling water passed through the engine 200 bypasses the hot water heat exchanger 450.

Specifically, the connection pipe 367 is formed to extend from the first introduction pipe 362a extending from the engine 200 to the hot water heat exchanger 450 toward the first discharge pipe 362b extending from the hot water heat exchanger 450 to the first flow switching part 310. In other words, one end of the connection pipe 367 is connected to one point of the first introduction pipe 362a, and the other end thereof is connected to one point of the first discharge pipe 362b.

A bypass valve 368 is installed at the connection pipe 367. For example, the bypass valve 368 may include a solenoid valve which is controllable to be opened and closed, or an electronic expansion valve of which an opening degree is controllable.

When the bypass valve 368 is closed, or an opening degree thereof is reduced, the amount of cooling water introduced into the hot water heat exchanger 450 may be reduced. However, when the bypass valve 368 is opened, or the opening degree thereof is increased, the amount of cooling water introduced into the hot water heat exchanger 450 may be increased.

In an entire path of the cooling water, the hot water heat exchanger 450 may be understood as a resistor which obstructs the flow of the cooling water. Therefore, when a demand for the hot water is not high, or it is necessary to increase a flow rate of the cooling water to the auxiliary heat exchanger 150 or the radiator 330, the bypass valve 368 may be opened, or the opening degree thereof may be controlled to be increased.

When the bypass valve 368 is opened, or the opening degree thereof is increased, at least some of the cooling water passed through the engine 200 may bypass the hot water heat exchanger 450, and may be introduced into the first flow switching part 310, and thus there is an effect that the flow rate of the cooling water circulated in the system is increased.

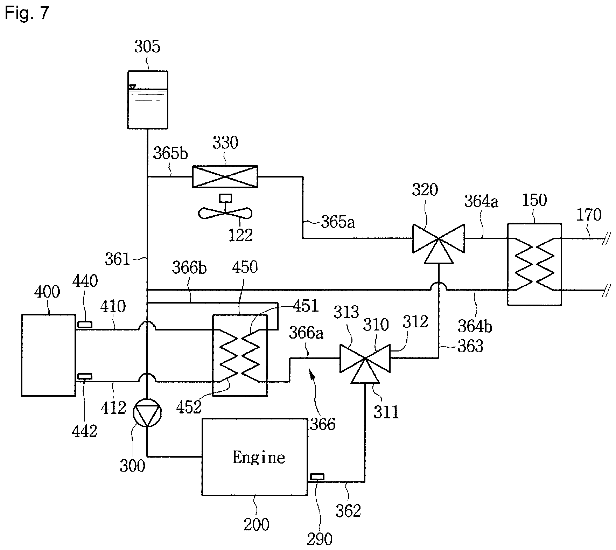

FIG. 7 is a system view illustrating a configuration of a main part of a GHP system according to a third embodiment of the present invention.

Referring to FIG. 7, a GHP system 10 according to a third embodiment of the present invention includes the hot water heat exchanger 450 which is installed at the sixth pipe 366.

Specifically, the sixth pipe 366 includes a fourth introduction pipe 366a which guides the cooling water discharged from the third port 313 of the first flow switching part 310 to the hot water heat exchanger 450, and a fourth discharge pipe 366b which guides the cooling water passed through the hot water heat exchanger 450 to the first pipe 461.

In the hot water heat exchanger 450, the heat exchange between a cooling water pipe 451 for hot water supply through which the cooling water flows and a cooling water pipe 452 for hot water through which the fluid flows may be performed.

The cooling water passed through the hot water heat exchanger 450 flows to the first pipe 361 via the fourth discharge pipe 366b. And the cooling water may pass through the cooling water pump 300, and may be introduced into the engine 200.

When there is a demand for hot water supply, the first flow switching part 310 may be controlled to open the third port 313. At this point, the second port 312 may be opened or closed. By opening of the third port 318, the cooling water introduced into the first flow switching part 310 is discharged to the sixth pipe 366 through the third port 313, and passes through the hot water heat exchanger 450.

However, when there is not the demand for hot water supply, the first flow switching part 310 may be controlled to close the third port 313, and thus the cooling water may be prevented from being introduced into the hot water heat exchanger 450.

That is, a cooling water path through which the cooling water flows to the hot water heat exchanger 450, and a cooling water path through which the cooling water flows to the auxiliary heat exchanger 150 or the radiator 330 may be formed in parallel. According to such a configuration, since the cooling water which should flow to the auxiliary heat exchanger 150 or the radiator 330 does not pass through the hot water heat exchanger 450, resistance against the flow of the cooling water becomes smaller, and thus the flow rate of the cooling water which is circulated in the system may be prevented from being reduced.

According to the GHP system according to the embodiment of the present invention, since the heat exchanger which can supply the hot water is provided, and the waste heat of the engine can be supplied to the heat exchanger, performance of the GHP system can be improved.

Also, since the two flow switching parts are provided, and thus circulation of the cooling water to the auxiliary heat exchanger, the hot water heat exchanger and the radiator can be controlled, a simple structure of the heat-pump system can be realized, and a control method thereof can also be simplified. Eventually, operation reliability of the heat-pump system is enhanced.

Also, since the path through which the cooling water can be bypassed to the engine when the temperature of the circulating cooling water is not increased to the set temperature is provided, the circulating water passed through the engine can be prevented from being supplied to the auxiliary heat exchanger or the radiator, and thus the circulating water can be prevented from being unnecessarily supplied.

Also, since the connection pipe which connects the inlet path and the outlet path of the hot water heat exchanger and the bypass valve which is installed at the connection pipe are provided, the resistance applied to the circulating cooling water can be reduced, and thus the flow rate of the cooling water can be prevented from being reduced.

Also, since the hot water heat exchanger is installed at the bypass pipe, the resistance applied to the circulating cooling water can be reduced, and thus the flow rate of the cooling water can be prevented from being reduced.

Even though all the elements of the embodiments are coupled into one or operated in the combined state, the present disclosure is not limited to such an embodiment. That is, all the elements may be selectively combined with each other without departing from the scope of the invention. Furthermore, when it is described that one comprises (or includes or has) some elements, it should be understood that it may comprise (or include or have) only those elements, or it may comprise (or include or have) other elements as well as those elements if there is no specific limitation. Unless otherwise specifically defined herein, all terms comprising technical or scientific terms are to be given meanings understood by those skilled in the art. Like terms defined in dictionaries, generally used terms needs to be construed as meaning used in technical contexts and are not construed as ideal or excessively formal meanings unless otherwise clearly defined herein.

Although embodiments have been described with reference to a number of illustrative embodiments thereof, it will be understood by those skilled in the art that various changes in form and details may be made therein without departing from the scope of the invention as defined by the appended claims. Therefore, the preferred embodiments should be considered in a descriptive sense only and not for purposes of limitation, and also the technical scope of the invention is not limited to the embodiments. Furthermore, the present invention is defined not by the detailed description of the invention but by the appended claims, and all differences within the scope will be construed as being comprised in the present disclosure.

## Claims

1. A gas heat-pump system (10) comprising:
an air-conditioning system comprising a compressor (110, 112), an outdoor heat exchanger (120), an expander, an indoor heat exchanger (140) and a refrigerant pipe (170);
an engine (200) configured to provide power for an operation of the compressor, and in which a mixed fuel, in which a fuel and air are mixed, is burned;
a cooling water pump (300) which compels a flow of cooling water for cooling the engine (200);
a cooling water pipe (360) connected to the cooling water pump (300), and configured to guide the flow of the cooling water;
an auxiliary heat exchanger (150) in which heat exchange between the cooling water flowing through the cooling water pipe (360) and a refrigerant flowing through the refrigerant pipe (170) is performed;
a hot water heat exchanger (450) in which heat exchange between the cooling water flowing through the cooling water pipe (360) and a fluid supplied from a hot water supply tank (400) is performed;
a first flow switching part (310) and a second flow switching part (320) installed at the cooling water pipe (360);
a cooling water tank (305) in which the cooling water is stored; and
a radiator (330) installed at one side of an outdoor fan (122) provided at the air-conditioning system;
wherein cooling water discharged from the engine (200) is guided to the hot water heat exchanger (450);
**characterized in that**:
the first flow switching part (310) guides the cooling water discharged from the hot water heat exchanger (450) to the second flow switching part (320) and
the second flow switching part (320) guides the cooling water discharged from the first flow switching part (310) to the radiator (330) or the auxiliary heat exchanger (150).

2. The gas heat-pump system (10) according to claim 1, wherein the cooling water pipe (360) comprises a first pipe (361) which extends from the cooling water tank (305) to the engine (200) so that the cooling water is introduced into the engine (200).

3. The gas heat-pump system according to claim 1 or 2, wherein the cooling water pipe (360) further comprises a second pipe (362) which extends from an outlet side of the engine (200) to the first flow switching part (310), and the hot water heat exchanger (450) is installed at the second pipe (362).

4. The gas heat-pump system according to claim 3, wherein the cooling water pipe (360) further comprises a third pipe (363) which extends from the first flow switching part (310) to the second flow switching part (320).

5. The gas heat-pump system according to claim 4, wherein the cooling water pipe (360) further comprises a fourth pipe (364) which extends from one port of the second flow switching part (320) to the auxiliary heat exchanger (150).

6. The gas heat-pump system according to claim 4 or 5, wherein the cooling water pipe (360) further comprises a fifth pipe (365) which extends from another port of the second flow switching part (320) to the radiator (330).

7. The gas heat-pump system according (10) to any of claims 3 to 6, further comprising a sixth pipe (366) which extends from the first flow switching part (310) to the first pipe (361) and bypasses the cooling water heat-exchanged in the hot water heat exchanger (450) to the engine (200).

8. The gas heat-pump system (10) according to any of claims 1 to 7, further comprising:
an inlet path (410) which extends from the hot water supply tank (400) to the hot water heat exchanger (450) and guides the fluid to the hot water heat exchanger (450), and
an outlet path (412) which extends from the hot water heat exchanger (450) to the hot water supply tank (400) and guides the fluid heat-exchanged in the hot water heat exchanger (450) to the hot water supply tank (400).

9. The gas heat-pump system (10) according to any of claims 1 to 8, wherein the hot water heat exchanger (450) comprises:
a cooling water pipe (451) for hot water supply which guides the flow of the cooling water; and
a hot water pipe (452) for hot water supply which guides a flow of the fluid supplied from the hot water supply tank (400).

10. The gas heat-pump system (10) according to any of claims 7 to 9, further comprising a cooling water temperature sensor (290) which senses a temperature of the cooling water discharged from the engine (200),
wherein, when it is recognized that a temperature value sensed by the cooling water temperature sensor (290) is a set temperature or less, the first flow switching part (310) is controlled so that the cooling water flows through the sixth pipe (366).

11. The gas heat-pump system (10) according to any of claims 1 to 10, wherein at least one of the plurality of flow switching parts (310, 320) comprises a 3-way valve.

12. The gas heat-pump system (10) according to any of claims 3 to 11, wherein the second pipe (362) further comprises:
a first introduction pipe (362a) which guides the cooling water discharged from the engine (200) to the hot water heat exchanger (450); and
a first discharge pipe (362b) which guides the cooling water heat-exchanged in the hot water heat exchanger (450) to the first flow switching part (310).

13. The gas heat-pump system (10) according to claim 12, further comprising a connection pipe (367) which extends from one point of the first introduction pipe (362a) to one point of the first discharge pipe (362b) so that at least some of the cooling water discharged from the engine (200) bypasses the hot water heat exchanger (450).

14. The gas heat-pump system (10) according to claim 13, further comprising a bypass valve (368) installed at the connection pipe (367).

## Patentansprüche

1. Gaswärmepumpenanlage (10) mit:
einer Klimatisierungsanlage, die einen Verdichter (110, 112), einen Außenwärmetauscher (120), einen Expander, einen Innenwärmetauscher (140) und eine Kältemittelleitung (170) aufweist;
einem Motor (200), der konfiguriert ist, Leistung für einen Betrieb des Verdichters bereitzustellen, und in dem ein Mischbrennstoff, in dem ein Brennstoff und Luft gemischt sind, verbrannt wird;
einer Kühlwasserpumpe (300), die einen Durchfluss von Kühlwasser zum Kühlen des Motors (200) erzwingt;
einer Kühlwasserleitung (360), die mit der Kühlwasserpumpe (300) verbunden und konfiguriert ist, den Durchfluss des Kühlwassers zu leiten;
einem Hilfswärmetauscher (150), in dem ein Wärmetausch zwischen dem durch die Kühlwasserleitung (360) fließenden Kühlwasser und einem durch die Kältemittelleitung (170) fließenden Kältemittel durchgeführt wird;
einem Heißwasserwärmetauscher (450), in dem ein Wärmetausch zwischen dem durch die Kühlwasserleitung (360) fließenden Kühlwasser und einem aus einem Heißwasserzufuhrtank (400) zugeführten Fluid durchgeführt wird;
einem ersten Durchflussumschaltteil (310) und einem zweiten Durchflussumschaltteil (320), die an der Kühlwasserleitung (360) installiert sind;
einem Kühlwassertank (305), in dem das Kühlwasser gespeichert ist; und
einem Radiator (330), der auf einer Seite eines Außengebläses (122) installiert ist, das an der Klimatisierungsanlage vorgesehen ist;
wobei aus dem Motor (200) ausgestoßenes Kühlwasser zum Heißwasserwärmetauscher (450) geleitet wird;
**dadurch gekennzeichnet, dass**:
der erste Durchflussumschaltteil (310) das aus dem Heißwasserwärmetauscher (450) ausgestoßene Kühlwasser zum zweiten Durchflussumschaltteil (320) leitet und der zweite Durchflussumschaltteil (320) das aus dem ersten Durchflussumschaltteil (310) ausgestoßene Kühlwasser zum Radiator (330) oder zum Hilfswärmetauscher (150) leitet.

2. Gaswärmepumpenanlage (10) nach Anspruch 1, wobei die Kühlwasserleitung (360) eine erste Leitung (361) aufweist, die sich vom Kühlwassertank (305) zum Motor (200) erstreckt, so dass das Kühlwasser in den Motor (200) eingeleitet wird.

3. Gaswärmepumpenanlage nach Anspruch 1 oder 2, wobei die Kühlwasserleitung (360) ferner eine zweite Leitung (362) aufweist, die sich von einer Auslassseite des Motors (200) zum ersten Durchflussumschaltteil (310) erstreckt, und der Heißwasserwärmetauscher (450) an der zweiten Leitung (362) installiert ist.

4. Gaswärmepumpenanlage nach Anspruch 3, wobei die Kühlwasserleitung (360) ferner eine dritte Leitung (363) aufweist, die sich vom ersten Durchflussumschaltteil (310) zum zweiten Durchflussumschaltteil (320) erstreckt.

5. Gaswärmepumpenanlage nach Anspruch 4, wobei die Kühlwasserleitung (360) ferner eine vierte Leitung (364) aufweist, die sich von einem Anschluss des zweiten Durchflussumschaltteils (320) zum Hilfswärmetauscher (150) erstreckt.

6. Gaswärmepumpenanlage nach Anspruch 4 oder 5, wobei die Kühlwasserleitung (360) ferner eine fünfte Leitung (365) aufweist, die sich von einem anderen Anschluss des zweiten Durchflussumschaltteils (320) zum Radiator (330) erstreckt.

7. Gaswärmepumpenanlage (10) nach einem der Ansprüche 3 bis 6, die ferner eine sechste Leitung (366) aufweist, die sich vom ersten Durchflussumschaltteil (310) zur ersten Leitung (361) erstreckt und das im Heißwasserwärmetauscher (450) wärmegetauschte Kühlwasser zum Motor (200) umleitet.

8. Gaswärmepumpenanlage (10) nach einem der Ansprüche 1 bis 7, die ferner aufweist:
einen Einlassweg (410), der sich vom Heißwasserzufuhrtank (400) zum Heißwasserwärmetauscher (450) erstreckt und das Fluid zum Heißwasserwärmetauscher (450) leitet, und
einen Auslassweg (412), der sich vom Heißwasserwärmetauscher (450) zum Heißwasserzufuhrtank (400) erstreckt und das im Heißwasserwärmetauscher (450) wärmegetauschte Fluid zum Heißwasserzufuhrtank (400) leitet.

9. Gaswärmepumpenanlage (10) nach einem der Ansprüche 1 bis 8, wobei der Heißwasserwärmetauscher (450) aufweist:
eine Kühlwasserleitung (451) zur Heißwasserzufuhr, die den Durchfluss des Kühlwassers leitet; und
eine Heißwasserleitung (452) zur Heißwasserzufuhr, die einen Durchfluss des vom Heißwasserzufuhrtank (400) zugeführten Fluids leitet.

10. Gaswärmepumpenanlage (10) nach einem der Ansprüche 7 bis 9, die ferner einen Kühlwassertemperatursensor (290) aufweist, der eine Temperatur des aus dem Motor (200) ausgestoßenen Kühlwassers abtastet,
wobei, wenn erkannt wird, dass ein durch den Kühlwassertemperatursensor (290) abgetasteter Temperaturwert eine Solltemperatur oder kleiner ist, der erste Durchflussumschaltteil (310) so gesteuert wird, dass das Kühlwasser durch die sechste Leitung (366) fließt.

11. Gaswärmepumpenanlage (10) nach einem der Ansprüche 1 bis 10, wobei mindestens eines der mehreren Durchflussumschaltteile (310, 320) ein 3-Wegeventil aufweist.

12. Gaswärmepumpenanlage (10) nach einem der Ansprüche 3 bis 11, wobei die zweite Leitung (362) ferner aufweist:
eine erste Einleitungsleitung (362a), die das aus dem Motor (200) ausgestoßene Kühlwasser zum Heißwasserwärmetauscher (450) leitet; und
eine erste Ausstoßleitung (362b), die das im Heißwasserwärmetauscher (450) wärmegetauschte Kühlwasser zum ersten Durchflussumschaltteil (310) leitet.

13. Gaswärmepumpenanlage (10) nach Anspruch 12, die ferner eine Verbindungsleitung (367) aufweist, die sich von einem Punkt der ersten Einleitungsleitung (362a) zu einem Punkt der ersten Ausstoßleitung (362b) erstreckt, so dass mindestens etwas des aus dem Motor (200) ausgestoßenen Kühlwassers den Heißwasserwärmetauscher (450) umgeht.

14. Gaswärmepumpenanlage (10) nach Anspruch 13, die ferner ein Umgehungsventil (368) aufweist, das an der Verbindungsleitung (367) installiert ist.

## Revendications

1. Système de pompe à chaleur à gaz (10), comprenant :
un système de climatisation comprenant un compresseur (110, 112), un échangeur de chaleur extérieur (120), un détendeur, un échangeur de chaleur intérieur (140) et une conduite de réfrigérant (170) ;
un moteur (200) prévu pour fournir une puissance pour le fonctionnement du compresseur, et où est brûlé un combustible mixte, mélange d'un combustible et d'air ;
une pompe à eau de refroidissement (300) refoulant un flux d'eau de refroidissement destiné à refroidir le moteur (200) ;
une conduite d'eau de refroidissement (360) raccordée à la pompe à eau de refroidissement (300), et prévue pour conduire le flux d'eau de refroidissement ;
un échangeur de chaleur auxiliaire (150) où est effectué un échange de chaleur entre l'eau de refroidissement s'écoulant dans la conduite d'eau de refroidissement (360) et
un réfrigérant s'écoulant dans la conduite de réfrigérant (170) ;
un échangeur de chaleur à eau chaude (450) où est effectué un échange de chaleur entre l'eau de refroidissement s'écoulant dans la conduite d'eau de refroidissement (360) et
un fluide provenant d'un réservoir d'alimentation en eau chaude (400) ;
une première section de commutation de flux (310) et une deuxième section de commutation de flux (320) montées sur la conduite d'eau de refroidissement (360) ;
un réservoir d'eau de refroidissement (305) où l'eau de refroidissement est stockée ; et
un radiateur (330) monté sur un côté d'un ventilateur extérieur (122) prévu sur le système de climatisation ;
l'eau de refroidissement évacuée du moteur (200) étant conduite vers l'échangeur de chaleur à eau chaude (450) ;
**caractérisé en ce que** :
la première section de commutation de flux (310) conduit l'eau de refroidissement évacuée de l'échangeur de chaleur à eau chaude (450) vers la deuxième section de commutation de flux (320) et
la deuxième section de commutation de flux (320) conduit l'eau de refroidissement évacuée de la première section de commutation de flux (310) vers le radiateur (330) ou l'échangeur de chaleur auxiliaire (150).

2. Système de pompe à chaleur à gaz (10) selon la revendication 1, où la conduite d'eau de refroidissement (360) comprend une première conduite (361) qui s'étend entre le réservoir d'eau de refroidissement (305) et le moteur (200) de manière à refouler l'eau de refroidissement dans le moteur (200).

3. Système de pompe à chaleur à gaz selon la revendication 1 ou la revendication 2, où la conduite d'eau de refroidissement (360) comprend en outre une deuxième conduite (362) qui s'étend entre un côté de sortie du moteur (200) et la première section de commutation de flux (310), et où l'échangeur de chaleur à eau chaude (450) est monté sur la deuxième conduite (362).

4. Système de pompe à chaleur à gaz selon la revendication 3, où la conduite d'eau de refroidissement (360) comprend en outre une troisième conduite (363) qui s'étend entre la première section de commutation de flux (310) et la deuxième section de commutation de flux (320).

5. Système de pompe à chaleur à gaz selon la revendication 4, où la conduite d'eau de refroidissement (360) comprend en outre une quatrième conduite (364) qui s'étend entre un orifice de la deuxième section de commutation de flux (320) et l'échangeur de chaleur auxiliaire (150).

6. Système de pompe à chaleur à gaz selon la revendication 4 ou la revendication 5, où la conduite d'eau de refroidissement (360) comprend en outre une cinquième conduite (365) qui s'étend entre un autre orifice de la deuxième section de commutation de flux (320) et le radiateur (330).

7. Système de pompe à chaleur à gaz (10) selon l'une des revendications 3 à 6, comprenant en outre une sixième conduite (366) qui s'étend entre la première section de commutation de flux (310) et la première conduite (361), et dérive vers le moteur (200) l'eau de refroidissement soumise à échange de chaleur dans l'échangeur de chaleur à eau chaude (450).

8. Système de pompe à chaleur à gaz (10) selon l'une des revendications 1 à 7, comprenant en outre :
un chemin d'entrée (410) qui s'étend entre le réservoir d'alimentation en eau chaude (400) et l'échangeur de chaleur à eau chaude (450) et conduit le fluide vers l'échangeur de chaleur à eau chaude (450), et
un chemin de sortie (412) qui s'étend entre l'échangeur de chaleur à eau chaude (450) et le réservoir d'alimentation en eau chaude (400) et conduit vers le réservoir d'alimentation en eau chaude (400) le fluide soumis à échange de chaleur dans l'échangeur de chaleur à eau chaude (450).

9. Système de pompe à chaleur à gaz (10) selon l'une des revendications 1 à 8, où l'échangeur de chaleur à eau chaude (450) comprend :
une conduite d'eau de refroidissement (451) pour l'alimentation en eau chaude, qui conduit le flux d'eau de refroidissement ; et
une conduite d'eau chaude (452) pour l'alimentation en eau chaude, qui conduit un flux du fluide refoulé du réservoir d'alimentation en eau chaude (400).

10. Système de pompe à chaleur à gaz (10) selon l'une des revendications 7 à 9, comprenant en outre un capteur de température d'eau de refroidissement (290) détectant la température de l'eau de refroidissement évacuée du moteur (200),
où, quand il est reconnu qu'une valeur de température détectée par le capteur de température d'eau de refroidissement (290) est égale ou inférieure à une température définie, la première section de commutation de flux (310) est commandée de manière à faire s'écouler l'eau de refroidissement dans la sixième conduite (366).

11. Système de pompe à chaleur à gaz (10) selon l'une des revendications 1 à 10, où au moins une section de la pluralité de sections de commutation de flux (310, 320) comprend une vanne à 3 voies.

12. Système de pompe à chaleur à gaz (10) selon l'une des revendications 3 à 11, où la deuxième conduite (362) comprend en outre :
une première conduite d'introduction (362a) qui conduit l'eau de refroidissement évacuée du moteur (200) vers l'échangeur de chaleur à eau chaude (450) ; et
une première conduite d'évacuation (362b) qui conduit vers la première section de commutation de flux (310) l'eau de refroidissement soumise à échange de chaleur dans l'échangeur de chaleur à eau chaude (450).

13. Système de pompe à chaleur à gaz (10) selon la revendication 12, comprenant en outre une conduite de connexion (367) qui s'étend entre un point de la première conduite d'introduction (362a) et un point de la première conduite d'évacuation (362b) de sorte qu'au moins une partie de l'eau de refroidissement évacuée du moteur (200) contourne par dérivation l'échangeur de chaleur à eau chaude (450).

14. Système de pompe à chaleur à gaz (10) selon la revendication 13, comprenant en outre une vanne de dérivation (368) montée sur la conduite de connexion (367).
